(19) Europäisches Patentamt / European Patent Office / Office européen des brevets

(11) **EP 4 194 303 B1**

(12) **EUROPEAN PATENT SPECIFICATION**

(45) Date of publication and mention
of the grant of the patent:
**01.05.2024  Bulletin 2024/18**

(21) Application number: **22212203.8**

(22) Date of filing: **08.12.2022**

(51) International Patent Classification (IPC):
**B60W 50/14** *(2020.01)*       **B60W 30/095** *(2012.01)*
**B60W 50/16** *(2020.01)*

(52) Cooperative Patent Classification (CPC):
**B60W 50/14; B60W 30/0956; B60W 50/16;**
B60W 2050/143; B60W 2050/146; B60W 2540/225;
B60W 2540/229; B60W 2554/4041;
B60W 2554/802; B60W 2555/20; B60W 2556/55

(54) **INATTENTION WARNING DEVICE AND INATTENTION WARNING METHOD**

UNAUFMERKSAMKEITSWARNVORRICHTUNG UND
UNAUFMERKSAMKEITSWARNVERFAHREN

DISPOSITIF D'AVERTISSEMENT D'INATTENTION ET PROCÉDÉ D'AVERTISSEMENT
D'INATTENTION

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority:  **09.12.2021   JP 2021199789**

(43) Date of publication of application:
**14.06.2023   Bulletin 2023/24**

(73) Proprietor: **Faurecia Clarion Electronics Co., Ltd.
Saitama-shi, Saitama 330-0081 (JP)**

(72) Inventors:
• **KONISHI, Taishin
  Saitama-shi, 330-0081 (JP)**
• **SATO, Kazunori
  Saitama-shi, 330-0081 (JP)**
• **ONO, Haruki
  Saitama-shi, 330-0081 (JP)**
• **TAKEI, Shingo
  Saitama-shi, 330-0081 (JP)**
• **NINOMIYA, Kazuya
  Saitama-shi, 330-0081 (JP)**
• **TAKATANI, Toshiyuki
  Saitama-shi, 330-0081 (JP)**

(74) Representative: **Lavoix
Bayerstraße 83
80335 München (DE)**

(56) References cited:
**SE-C2- 540 361     US-A1- 2019 359 058**

## Description

TECHNICAL FIELD

The present invention relates to an inattention warning device and an inattention warning method.

BACKGROUND

Conventionally, there are known face direction warning devices that warn the driver when driver inattention has been detected, by detecting the face direction angle of the driver, and detecting inattention by the driver when the face direction angle satisfies a prescribed evaluation criterion. In the conventional face direction warning device, a lane dividing line that partitions traffic lanes are recognized, and the driver inattention evaluation criterion is modified depending on whether or not the driver recognize a lane dividing line in normal condition (referencing JP2008-217693A).

Conventionally, there are known obstacle warning systems that issue warnings appropriately regarding a danger of a collision, by processing road condition information obtained from a locator and sensor information such as from optical sensors, vehicle velocity sensors in an information processing device. In a conventional obstacle warning system, to avoid a collision, the system varies its warning algorithms for calculating the distance to an obstacle, and its setting values for warning conditions depending on the condition of the road, the time zone of travel, and the continuous driving time, in addition to the sensor information. The sensor information is acquired from optical sensors, vehicle velocity sensors, dozing sensor fusion, inattention sensor fusion, weather sensor fusion (referencing JP1995-257301A).

Further, it is known from SE 540 361 C2 to inhibit a driver inattention alert in case of a critical change in vehicle environmental conditions, such as a weather condition affecting visibility.

SUMMARY

However, with the technology disclosed in JP2008-217693A, the driver inattention evaluating criterions will vary depending on whether or not a driver recognizes a lane dividing, and a warning is issued to the driver without modifying the inattention evaluation criterions depending on whether or not the visibility of the surroundings for the driver is good or bad. Consequently, even if the driver carefully checks the surroundings because the visibility for the driver is poor, a warning will be issued to the driver with the same timing as if the visibility for the driver were good. Because of this, the driver will be annoyed when an inattention warning is issued due to the requisite action of carefully checking the surroundings. Incidentally, JP2008-217693A describes that the state of windshield wiper actuation is excluded from the "non-recognized information." However, the reason of this exclusion is to consider that the actuation of the windshield wipers to interfere with recognizing the dividing.

The technology disclosed in JP1995-257301A is for more quickly issuing a warning in the obstacle warning system by recognizing inattention or weather through actuation of the windshield wipers. Consequently, when the obstacle warning technology disclosed in JP1995-257301A is applied to the inattention warning technology, the warning to the driver will be issued more quickly when the driver is carefully checking the surroundings due to poor visibility for the driver, than when the visibility for the driver is good. Because of this, the driver will become annoyed when the inattention warning is issued as a result of the requisite act of carefully checking the surroundings. Incidentally, in JP1995-257301A, the recognition of inattention is performed independently of the recognition of weather, so the operation of the windshield wipers has no effect on the recognition of inattention itself.

The present invention was created in contemplation of the situation above, and the object thereof is to provide an inattention warning device and an inattention warning method that can reduce annoyance to the driver, by preventing issuing of unnecessary warnings when there is bad weather that interferes with the visibility for the driver of the surroundings.

The inattention warning device according to the present invention provides a warning for inattention by the driver of a vehicle, and comprises an inattention detecting unit, a weather detection unit, a warning issuing time calculating unit and a warning unit. The inattention detecting unit detects inattention of the driver of the vehicle. The weather detection unit detects weather outside the vehicle. The warning issuing time calculation unit calculates a warning issuing time by calculation in accordance with a predetermined condition when the inattention of the driver has been detected. This calculation in accordance with the predetermined condition includes a calculation that delays the warning issuing time when the weather detection unit detects bad weather. The warning unit issues a warning regarding the inattention if the inattention continues until the warning issuing time has expired, otherwise not issues any warning regarding the inattention if the inattention has not continued until the warning issuing time has expired.

In the inattention warning method for warning a driver of a vehicle regarding inattention, according to the present invention, inattention of the driver of the vehicle is detected, weather outside the vehicle is detected, a warning issuing time is calculated by calculation in accordance with a predetermined condition when the inattention of the driver has been detected, and a warning is issued regarding the inattention if the inattention continues until the warning issuing time has expired, otherwise no warning regarding the inattention if the inattention has not continued until the warning issuing time has expired. The calculation in accordance with the predetermined condition includes a calculation that delays the warning issuing time when bad weather is detected outside the vehicle.

EFFECTS OF THE INVENTION

In the inattention warning device and the inattention warning method according to the present invention, issuing of unnecessary warnings in bad weather that interferes with visibility of the surroundings for the driver is prevented, and the annoyance of the driver can be reduced.

BRIEF DESCRIPTIONS OF THE DRAWINGS

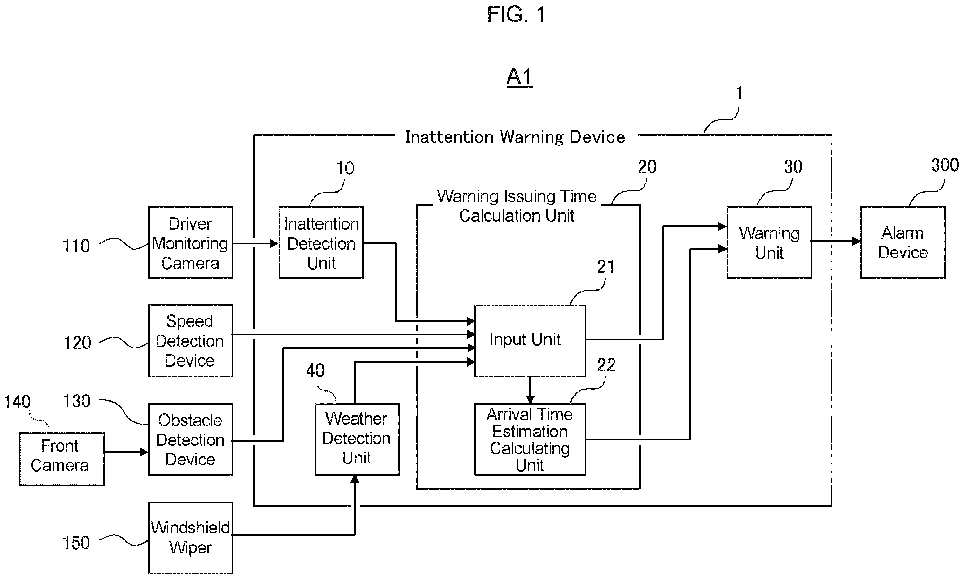

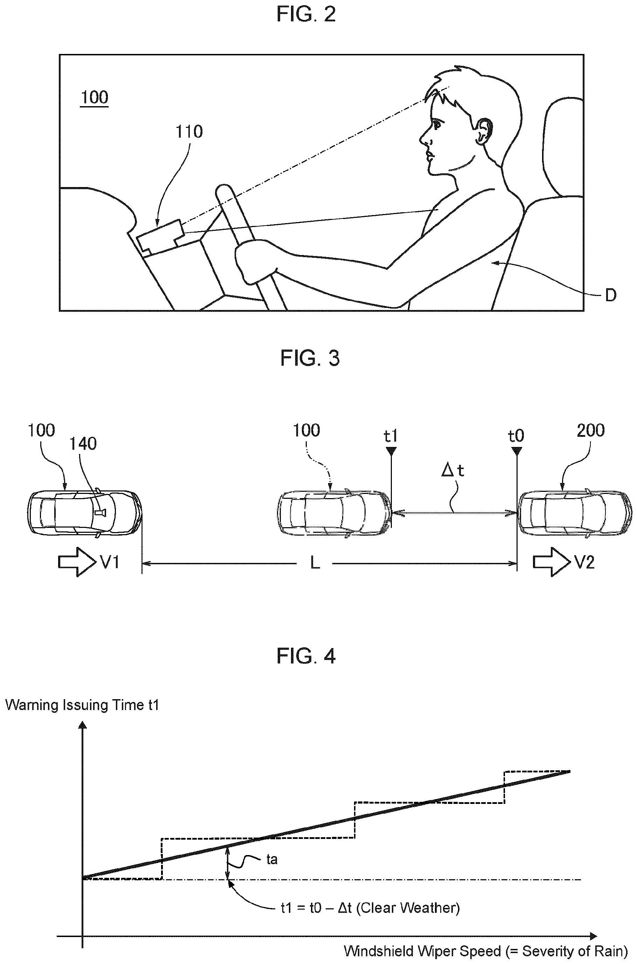

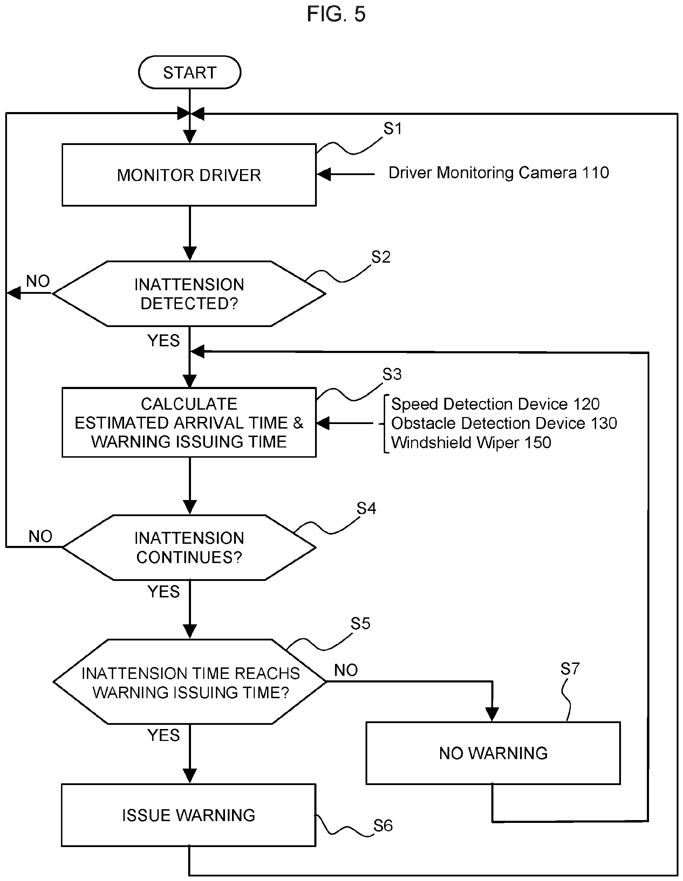

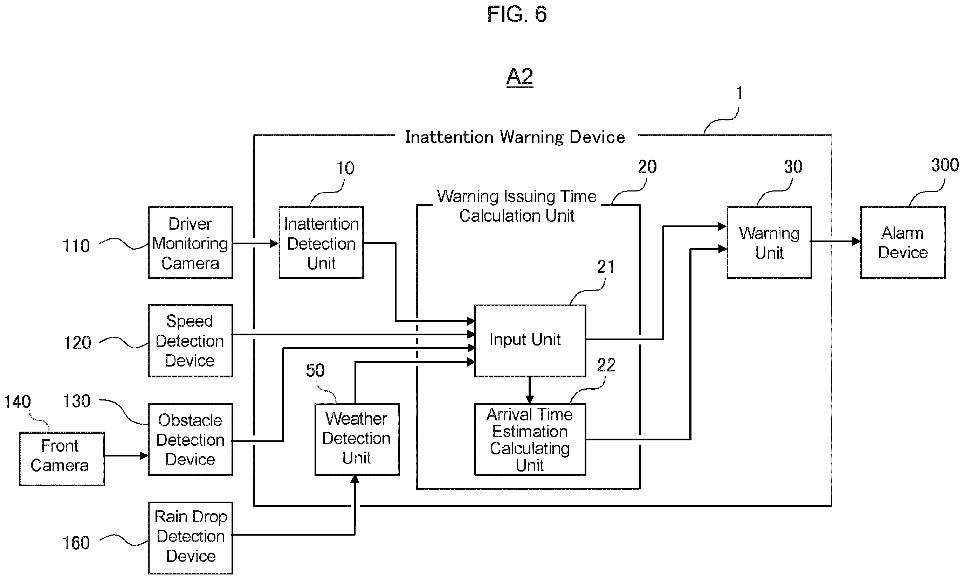

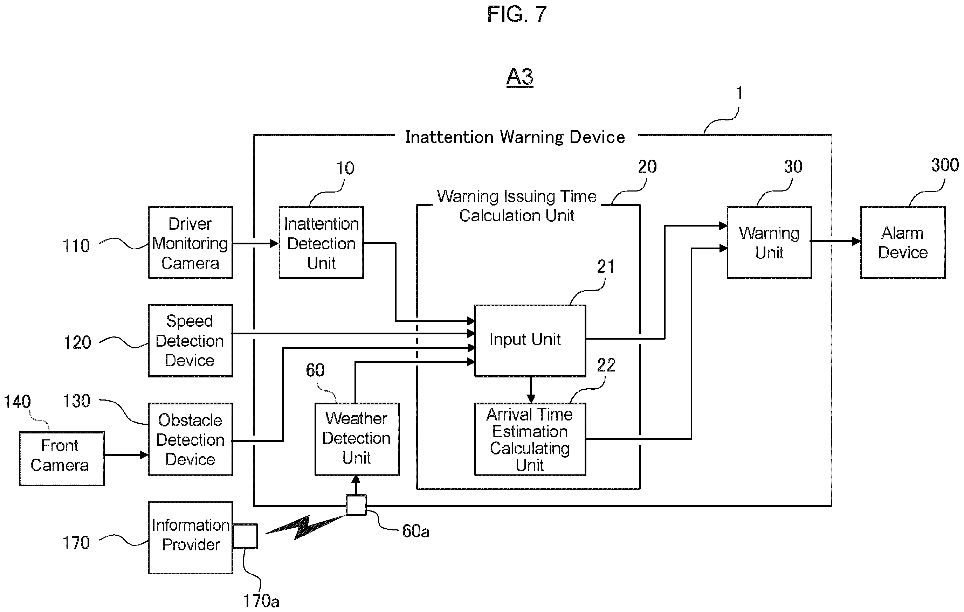

FIG. 1 shows a block diagram of a driver monitoring system which includes a first embodiment of an inattention warning device. FIG. 2 shows a schematic drawing of a driver monitoring camera in a vehicle. FIG. 3 shows a calculating process in an arrival time estimation calculating unit of the inattention warning device according to the first embodiment. FIG. 4 shows a graph of the correlation between the wiper speed (= severity of rain) and the warning issuing time calculated by a warning issuing time calculation unit of the inattention warning device according to the first embodiment. FIG. 5 shows a flowchart showing the operations executed by the inattention warning device according to the first embodiment. FIG. 6 shows a block diagram of a driver monitoring system which includes a second embodiment of an inattention warning device. FIG. 7 shows a block diagram of a driver monitoring system which includes a third embodiment of an inattention warning device.

DETAILED DESCRIPTION

With respect to the use of plural and/or singular terms herein, those having skill in the art can translate from the plural to the singular and/or from the singular to the plural as is appropriate to the context and/or application. The various singular/plural permutations may be expressly set forth herein for sake of clarity.
Embodiment 1 through Embodiment 3 of the inattention warning device and an inattention warning method according to the present invention will be explained below based on the drawings.

EMBODIMENT 1

The inattention warning device and inattention warning method according to a first embodiment are applied to a driver monitoring system A1. The driver monitoring system A1 is a system that provides a warning prompting an attention, upon determination that there is the possibility that safe operation cannot be continued based on detection of inattention, which is a situation such that the driver is looking in a direction other than forward. The structure of the driver monitoring system A1 will be explained below in reference to FIG. 1 through FIG. 4.
As shown in FIG. 1, the inattention warning device 1 of the driver monitoring system A1 comprises an inattention detection unit 10, a warning issuing time calculation unit 20, a warning unit 30 and a weather detection unit 40.
As shown in FIG. 2, the inattention detection unit 10 detects whether or not the driver D is inattentive based on an image of the face of the driver D. The image is inputted from a driver monitoring camera 110 that captures the face of the driver D of a vehicle 100. For the details, the inattention detection unit 10 detects movements of the gaze line of the driver D through image processing based on the captured images of the face of the driver D, and distinguishes whether or not there is inattention based on the movement of the gaze line of the driver D. For example, "inattention" is detected when the gaze line of the driver D is in a direction other than to the front and this situation continues for more than a prescribed time interval. Also, "inattention" is detected even if the gaze line of the driver D flits to multiple places if there is a continuous time interval without looking to the front.
The warning issuing time calculation unit 20 calculates and outputs a warning issuing time $t1$ with the timing with which inattention by the driver D is detected. For the details, the warning issuing time calculation unit 20 comprises a input unit 21 and an arrival time estimation calculating unit 22. The input unit 21 receives inattention detection information that is inputted from the inattention detection unit 10, speed information of the vehicle 100 that is inputted from a speed detection device 120, obstacle detection information that is inputted from an obstacle detection device 130, and weather detection information that is inputted from a weather detection unit 40.
The speed detection device 120 is equipped in the vehicle 100 and detects the travel speed $V1$ of the vehicle 100, for example, by detecting the wheel speed of the vehicle 100.
The obstacle detection device 130 detects obstacles 200 (for example, preceding vehicles, obstacles on the roadway) that are present within a prescribed range in the surroundings of the vehicle 100. The obstacle detection device 130 in the first embodiment is implemented by a camera ECU (Electronic Control Unit) that calculates required information based on an image to the front of the vehicle 100. The image is captured by a front camera 140 as shown in FIG. 3. The camera ECU, upon detection of an obstacle 200, calculates a distance $L$ from the vehicle 100 to the obstacle 200 and a movement speed $V2$ of the obstacle 200. Through this, the input unit 21 receives the distance $L$ from the vehicle 100 to the obstacle 200 and the movement speed $V2$ of the obstacle 200 as obstacle detection information from the obstacle detection device 130. The relative speed between the vehicle 100 and the obstacle 200 may be calculated and received instead of the movement speed V2 of the obstacle 200.

The weather detection unit 40 detects the weather outside the vehicle 100 based on windshield wiper actuation information from a windshield wiper 150. For the details, in the case that the operating speed of the windshield wiper 150 can be adjusted continuously, the weather detection unit 40 detects more severe rain weather as the speed of the windshield wipers 150 is set faster. Also, in the case that the operating speed of the windshield wiper 150 can be adjusted in stepwise, the weather detection unit 40 detects more severe rain weather as the speed stage of the windshield wipers 150 is set to a faster stage. Also, in the case that the windshield wiper 150 is an intermittent wiper, the operation intervals of which can be adjusted continuously or in stepwise, the weather detection unit 40 detects more severe rain weather as the intervals of the windshield wipers 150 is set shorter. Thus, the input unit 21 receives information regarding the severity of the rain according to the speed of the windshield wipers 150 together with information for clear weather based on that the windshield wiper 150 is stopped and information for rainy weather based on that the windshield wiper 150 is operating, as a weather detection information WS from the weather detection unit 40.

The arrival time estimation calculating unit 22 calculates the warning issuing time t1 through calculations in accordance with predetermined conditions with the timing with which inattention by the driver D is detected. The calculations according to the predetermined conditions include a calculation which delays the warning issuing time t1 when the weather detection unit 40 detects bad weather, compared to when the weather detection unit 40 detects good weather.

In the calculations according to the predetermined condition by the arrival time estimation calculating unit 22, the estimated arrival time t0, at which the vehicle 100 is predicted to reach at an obstacle 200, is calculated using below Equation (1) based on the travel speed V1, the distance L, and the movement speed V2. The warning issuing time t1, which is shorter than the estimated arrival time t0 is calculated by below Equation (2). In Equation (2), a prescribed delay time $\Delta t$ is subtracted from the estimated arrival time t0, and a predetermined additional time ta is added if bad weather is detected by the weather detection unit 40 (referencing FIG. 3):

$$t0 = L \, / \, (V1\text{-} \, V2) \ldots (1)$$

$$t1 = t0\text{-} \, \Delta t + ta \quad \ldots (2)$$

where, in Equation (1), (V1-V2) is the relative speed between the vehicle 100 and the obstacle 200. In Equation (2), the delay time $\Delta t$ is the predetermined time set as the time for the driver D to become aware of a warning after the warning unit 30 has issued a warning, which is determined experimentally to an appropriate value.

The predetermined additional time ta (< delay time $\Delta t$) in Equation (2) is a delay-adjusted time for issuing a warning, wherein the warning issuing time t1 is delayed depending on the visibility of the surroundings for the driver D. Upon the weather detection unit 40 detecting clear weather as the weather detection information WS through the wiper being stopped, it is assumed that the visibility of the surroundings is good, so ta = 0 is set (with no delay due to weather). On the other hand, if the weather detection unit 40 detects rainy weather as the weather detection information WS through the windshield wiper operation, it is assumed that the visibility of the surroundings is poor, so ta > 0 is set (There is a delay caused by weather.). As shown in FIG. 4, when rainy weather is detected by the windshield wiper operation, the faster the speed of the windshield wiper (= intense of rain), the longer the additional time ta is set, based on the continuous curve (the solid line) or the staged curve (dotted line). That is, the additional time ta that is added when bad weather is detected is set longer when the weather information, which is detected by the weather detection unit 40, indicates that the visibility of the surroundings to the driver D becomes poorer.

The warning unit 30 issues a warning for inattention by outputting an actuation signal to the alarm device 300 when the inattention has continued even after the warning issuing time has expired, and does not issue a warning for inattention if the inattention has not continued until the warning issuing time expires. The warning issuing time calculation unit 20 evaluates whether or not the inattention is continuing by outputting a signal to the warning unit 30 when the input unit 21 continuously receives an inattention detection signal from the inattention detection unit 10. The alarm device 300 informs the driver of the warning by auditory information using a sounder or a speaker such as alarming sound and vocal announcement, or visual information using a display or a light emitter, or tactile information using vibrator, or their combination.

The operation of the inattention warning device 1 according to Embodiment 1 will be explained next. FIG. 5 is a flowchart showing the flow of an inattention warning operation executed by the inattention warning device 1. Note that the operation of the inattention warning device 1 is an example embodiment of an inattention warning method according to the present invention.

First, the driver monitoring camera 110 continuously captures images of the face of the driver D, and the inattention detection unit 10 inputs the captured images of the face of the driver D. The inattention detection unit 10 monitors the driver based on the inputted face image of the driver D (S1 in FIG. 5), and detects inattention by the driver D (S2).

If the inattention detection unit 10 does not detect inattention, the monitoring of the driver D (S1) and the inattention detection (S2) is repeated. When the inattention detection unit 10 detects inattention of the driver, the inattention detection unit 10 outputs the detection signal indicating the detection to the input unit 21 (S2).

This signal is continuously outputted as long as the inattention is continuing. When the inattention has ended, the inattention detection unit 10 stops the output of the detection signal to the input unit 21.

Regardless of whether or not the detection signal indicating an occurrence of inattention is received, the input unit 21 constantly receives the travel speed V1 of the vehicle 100 from the speed detection device 120. The input unit 21 also receives the distance L to the obstacle 200 detected to the front of the vehicle 100 and the movement speed V2 of the obstacle 200, from the obstacle detection device 130. When no obstacle 200 to the front of the vehicle 100 is detected, the input unit 21 does not receive any input of the distance L nor the movement speed V2. If the obstacle 200 is a stopped vehicle or a stationary object, or the like, the movement speed V2 is set to zero.

The input unit 21 outputs the travel speed V1 of the vehicle 100, the distance L to the obstacle 200, the movement speed V2 of the obstacle 200, and the weather detection information WS to the arrival time estimation calculating unit 22. The input unit 21, upon reception of an input that there is an occurrence of inattention (S2), outputs, to the arrival time estimation calculating unit 22, that there has been an occurrence of inattention.

When the arrival time estimation calculating unit 22 has received the input indicating that there has been an occurrence of inattention, from the input unit 21, with the timing of that input, the arrival time estimation calculating unit 22 calculates the estimated arrival time t0 at which the vehicle 100 is estimated to reach at the obstacle 200. Given this, the warning issuing time t1 is calculated by subtracting the predetermined delay time $\Delta t$ from the estimated arrival time t0, and adding the additional time ta (S3).

The arrival time estimation calculating unit 22 outputs the calculated warning issuing time t1 to the warning unit 30. If the inattention by the driver D continues, the input unit 21 notifies the warning unit 30 that the inattention is continuing (S4).

While receiving the input from the input unit 21 that the inattention is continuing, the warning unit 30 measures the time over which the inattention has continued (the inattention time), and waits for the inattention time to reach the warning issuing time t1 that has been inputted from the arrival time estimation calculating unit 22 (S5).

Prior to the inattention time arriving at the warning issuing time t1 (NO in S5), the warning unit 30 does not issues a warning regarding inattention to the driver D (S7). The estimated arrival time t0 and the warning issuing time t1 are recalculated, and the warning issuing time calculation unit 20 evaluates whether or not the inattention is still continuing (S4).

Additionally, if the inattention ends prior to the inattention time arriving at the warning issuing time t1, that is, if the input from the input unit 21, which indicates that the inattention is continuing, has stopped, the inattention time will not reach the warning issuing time t1 (NO in S5). Therefore, the warning issuing time calculation unit 20 evaluates whether or not the inattention is continuing (S4) without issuing a warning regarding inattention (S7) to the driver D by the warning unit 30, and returns to monitoring the driver D (S1),

On the other hand, when the inattention time has arrived at the warning issuing time t1, it is expected that the vehicle 100 will reach the obstacle 200 and collide with it (if the inattention is assumed to continue), so the warning unit 30 issues a warning regarding inattention to the driver D (S6). This encourages the driver to stop the inattention, and effectively prevent the vehicle 100 from the collision with the obstacle 200.

Here, when calculating the warning issuing time t1, the predetermined delay time $\Delta t$ is subtracted from the estimated arrival time t0, and the additional time ta due to the weather is added. The reason why the additional time ta due to the weather is added to delay the warning issuing time t1 in this way will be explained below.

The weather is a factor in the driver D checking the surroundings. For example, the visibility will be poor if it is raining. In such situation, the driver D must carefully check the situation of the surroundings in order to keep safety during driving in rainy weather. For example, the actions for checking the surroundings are;

(a) Gazing at a guard rail or other references of the road because the visibility in the front view is poor.
(b) Moving the gaze line from place to place in wide directions because the situation cannot be recognized by objects in only one direction.

However, such confirming actions of the surroundings by the driver D are detected as an inattention by the direction and the movement of the gaze line other than forward, and causes the inattention warning. Such warning annoys the driver D. Therefore, if the visibility to the front of the driver is poor, it is preferable to restrain sounding the alarm through issuing an inattention warning by setting the thresholds looser.

As explained above, the inattention warning device 1 and the inattention warning method of Embodiment 1 have the effects listed below.

(1) The inattention warning device 1 for giving a warning for inattention to the driver D of a vehicle 100, comprises the inattention detecting unit 10, the weather detection unit 40, the warning issuing time calculating unit 20 and the warning unit 30. The inattention detecting unit 10 detects inattention of the driver D of the vehicle 100. The weather detection unit 40 detects weather outside the vehicle 100. The warning issuing time calculation unit 20 calculates the warning issuing time t1 by calculation in accordance with a predetermined condition when the inattention of the driver has been detected. This calculation in accordance with the predetermined condition includes the calculation that delays the warning issuing time t1 when the weather detection unit 40 detects bad weather. The warning unit 30 issues the warning regarding the inattention if the inattention continues until the warning issuing time t1 has expired, otherwise not issues any warning regarding the inattention if the inattention has not continued until the warning issuing time t1.

That is, a structure is employed wherein, if the weather detection unit 40 detects bad weather, a calculation that delays the warning issuing time t1 is included in the calculation for calculating the warning issuing time t1. This makes it possible to provide the inattention warning device 1 that reduces annoyance caused to the driver D by preventing issuing of unnecessary warnings during the bad weather causing poor visibility of the surroundings for the driver D. Additionally, the warning unit 30 determines dynamically whether or not issuing a warning by comparing the continuation of inattention and the warning issuing time t1. That is, even if the inattention time has exceeded a predetermined time, the inattention warning device 1 will not issue a warning if there is no risk of the vehicle 100 colliding with the obstacle 200. Because of this, the inattention warning device 1 is able to prevent or restrain the issuing of unnecessary warnings compared with the conventional inattention warning device that determines whether or not to issue a warning based on only the inattention time, that is, on whether or not the inattention time has exceeded a prescribed time.

(2) The warning issuing time calculation unit 20 calculates the estimated arrival time t0, at which the vehicle 100 is expected to arrive at the obstacle 200, and subtracts a prescribed delay time $\Delta t$ from the estimated arrival time t0 as the calculation that follows the predetermined condition. Following this, the warning issuing time t1 is calculated by adding the additional time ta if the weather detection unit 40 detects bad weather.

That is, the estimated arrival time t0 and the delay time $\Delta t$ are used as the basis for calculating the warning issuing time t1 for issuing a warning if there is the risk of the vehicle 100 colliding with the obstacle 200 despite the inattention time being shorter than the predetermined time. Then, if bad weather is detected, the additional time ta is added to the calculated warning issuing time t1 to delay issuing of the warning. Because of this, the weather detection result can be reflected into the issuing time of the warning while preventing or suppressing unnecessary warnings compared to the conventional inattention warning device that determines whether or not to issue a warning based only on the inattention time, that is, whether or not the inattention time has exceeded the prescribed time.

(3) The warning issuing time calculation unit 20 sets the additional time ta to be added upon bad weather detection to longer time as the weather information detected by the weather detection unit 40 indicates worse visibility of the surroundings for the driver D. That is, the worse the visibility of the surroundings for the driver D, the more the need for the driver D to perform periphery confirming actions to carefully check the surroundings. Consequently, the additional time ta is set to a time that is longer the worse the visibility of the surroundings for the driver D, matching the degree of how the confirmation actions of the surroundings are required. Because of this, compared to the case wherein the warning issuing time is extended by only a prescribed time regardless of how bad the visibility is during the bad visibility of the surroundings, the timing will be set appropriate to prevent the annoyance of the driver D without the warning issuing time being too early or too delayed.

(4) The weather detection unit 40 detects the weather outside the vehicle 100 based on windshield wiper actuation information from the windshield wiper 150. Because of such detection, the severity of the rain can be estimated and detected, along with detecting the weather outside the vehicle 100 is clear or rainy, based on the windshield wiper actuation information using a windshield wiper 150 that is already installed in the vehicle 100.

(5) The inattention warning method detects weather outside of the vehicle 100 when it issues a warning regarding inattention by detecting inattention of the driver D of the vehicle 100. The warning issuing time t1 is obtained by the calculation in accordance with the predetermined conditions at the time that inattention by the driver D is detected. The calculation according to the predetermined conditions includes the calculation to delay the warning issuing time t1 if bad weather is detected. A warning for inattention is issued if the inattention continues until the warning issuing time t1 expires, and no warning for inattention is issued if the inattention does not continue until the warning issuing time t1 expires.

Therefore, this inattention warning method can reduce annoyance caused to the driver D by preventing issuing of unnecessary warnings when the weather is bad and causing poor visibility of the surroundings for the driver D. Additionally, compared to the conventional inattention warning method that determines whether or not to issue a warning based entirely on the inattention time, that is, whether or not the inattention time has exceeded a prescribed time, unnecessary warnings can be prevented or suppressed.

(6) The estimated arrival time t0, at which the vehicle 100 is expected to arrive at the obstacle 200, is calculated and the prescribed delay time Δt is subtracted from the estimated arrival time t0 in the predetermined calculation. Also, the warning issuing time t1 is calculated by adding the additional time ta if bad weather is detected.

Because of this, compared to the conventional inattention warning method that determines whether or not to issue a warning based only on the inattention time, that is, whether or not the inattention time has exceeded a prescribed time, the weather detection result can be reflected into the time for producing the warning, while preventing or suppressing instances of unnecessary warnings.

EMBODIMENT 2

Embodiment 2 is a second embodiment where the weather outside the vehicle 100 is detected using a rain drop detection device 160 instead of the windshield wiper 150 in the Embodiment 1.

FIG. 6 is a block diagram showing a driver monitoring system A2, to which an inattention warning device 1 and the inattention warning method according to Embodiment2 is applied. The structure of the inattention warning device 1 of Embodiment 2 will be explained below. Note that because the structure is identical to that of Embodiment 1 except for the weather detection unit 50, the identical reference numbers are assigned to corresponding structures, and explanations thereof are omitted. Also, the operations of the inattention warning device 1 of Embodiment 2 are executed following the flowchart shown in FIG. 5 for Embodiment 1, thus charts and explanations thereof are omitted.

The weather detection unit 50 of Embodiment 2 detects the weather outside the vehicle 100 based on rain detection information from a rain drop detection device 160 that detects rain on the windshield. For the details, the rain drops detection device 160 is a sensor device for automated windshield wiper operation without switch operation. This device outputs a windshield wiper driving controlling signal commensurate with the amount of rain to the computer upon detection of rain in a detection area on the windshield. The principal for detecting the rain by the rain drop detection device 160 is as follows. The rain drops detection device 160 emits infrared radiation toward the outside. The infrared radiation is reflected from the glass when no rain is adhered to the windshield. the infrared radiation passes to the outside of the glass through the rain when rain is adhered. Therefore, the rain drops detection device 160 can detect the amount of rain by sensing the amount of the reflected infrared radiation.

The input unit 21 receives clear weather information when no rain is detected, rainy weather information when rain is detected, and also information about the severity of the rain depending on the amount of rain, as weather detection information WS from the weather detection unit 50.

The inattention warning device 1 and the inattention warning method of Embodiment 2 have the following effects in addition to the effects of (1), (2), (3), (5), and (6) of Embodiment 1:
(7) The weather detection unit 50 detects the weather outside the vehicle 100 based on rain detection information from the rain drop detection device 160 that detects rain on the windshield.

This enables the severity of the rain to be estimated and detected, along with detecting whether the weather outside the vehicle 100 is clear or rainy, based on rain detection information using a rain drop detection device 160, which has already been installed as the automated windshield wiper sensor.

EMBODIMENT 3

Embodiment 3 is an example wherein the weather outside the vehicle 100 is detected using information sent from an external information provider 170 by a radio communication, instead of the windshield wiper 150 of Embodiment 1 or the rain drop detection device 160 of Embodiment 2.

FIG. 7 is a block diagram showing a driver monitoring system A3 is an inattention warning device 1 and the inattention warning method according to Embodiment 3. The structure of the inattention warning device 1 of Embodiment 3 will be explained below. Because the structure is identical to that of Embodiment 1 except for the weather detection unit 60, identical reference is assigned to corresponding structures, and explanations thereof are omitted. The operations of the inattention warning device 1 of Embodiment 3 are executed following the flowchart depicted in FIG. 5 Embodiment 3 and thus illustrations and explanations thereof are omitted.

The weather detection unit 60 has a communication device 60a which sends and receive weather information, and detects the weather outside the vehicle 100 based on the weather information acquired from the external information provider 170 through radio communication. Here the external information provider 170 refers to infrastructural equipment of a weather information center or traffic information center, or the like, that transmits the weather information updated constantly, such as for clear weather, fog, rain, wind, snow, mist, air temperature, from a communicating device 170a in response to a request. An information providing service, such as Cloud computing service on the Internet, may be used as the information provider 170 to acquire the weather information. Otherwise, the external information provider 170 may be another vehicle having the weather information, and the communicating device 170a may acquire the weather information in that car through vehicle-to-vehicle communication.

The input unit 21 receives good visibility information such as clear or cloudy weather, poor visibility information due to rain, snow, or fog, and also an estimated visibility level such as the amount of rain, snow, or fog, as the weather detection information WS from the weather detection unit 60.

The inattention warning device 1 and the inattention warning method of Embodiment 3 have the following effects in addition to the effects of (1), (2), (3), (5), and (6) of Embodiment 1.

(8) The weather detection unit 60 detects weather outside of the vehicle 100 based on the weather information acquired through radio communication from an external information provider 170.

This makes it possible to obtain visibility information including visibility level with good accuracy based on detailed weather information of the driving environment around the vehicle 100 from the external information provider 170 through radio communication.

The inattention warning device 1 and the inattention warning method of the present invention are explained above based on Embodiments 1 through 3. However, the specific structures are not limited to these embodiments. Design changes, additions, and the like, are allowed insofar as there is no deviation from the invention according to the appended claims.

In Embodiment 1, an example was presented wherein the weather outside the vehicle 100 is detected based on windshield wiper actuation information from a windshield wiper 150, as a weather detection unit 40. In Embodiment, an example was presented wherein the weather outside the vehicle 100 is detected based on rain detection information from a rain drop detection device 160 that detects rain on the windshield, as a weather detection unit 50. In Embodiment 3, an example was presented wherein weather outside the vehicle 100 is detected based on weather information acquired through radio communication from an external information provider 170, as a weather detection unit 60. However, the weather detecting unit is not limited to the examples in Embodiments 1-3, but rather it may instead be an example wherein the weather outside the vehicle is detected based on activation information from fog light devices used when there is bad weather that causes poor visibility, such as fog, strong winds, snowfall. Moreover, the examples of devices given in Embodiments 1-3 and example of the fog light device may be combined as appropriate as an example of detecting the weather outside the vehicle.

In Embodiments 1-3, examples were presented wherein, for the arrival time estimation calculating unit 22, a formula was used wherein a prescribed delay time $\Delta t$ was subtracted from the estimated arrival time t0 and a prescribed time ta was added if a weather detection unit 40 detected bad weather, to calculate a warning issuing time t1, as the arrival time estimation calculating unit 22. However, the arrival time estimation calculating unit is not limited to the examples given in Embodiments 1-3. For example, it may be an example wherein the warning issuing time t1 is calculated by focusing on the estimated arrival time t0 and adding a prescribed time ta to the actual estimated arrival time t0, to calculate an estimated arrival time t0' when the weather detection unit has detected bad weather, and subtracting the prescribed delay time $\Delta t$ from the estimated arrival time 10'. Moreover, the example may be that of calculating the warning issuing time t1 by focusing on, for example, the delay time $\Delta t$ and calculating a delay time $\Delta t$' by subtracting a prescribed time ta when bad weather is detected by the weather detection unit, and subtracting the delay time $\Delta t$' from the estimated arrival time t0. The estimated arrival time t0, delay time $\Delta t$, and prescribed time ta are effectively incorporated into the warning issuing times t1 that are calculated in this way, and the calculation for delaying, by the additional time ta, the warning issuing time t1 when bad weather is detected is included.

Embodiments 1-3 present preferred examples wherein, as the warning issuing time calculation unit 20, the additional time ta that is added when bad weather is detected will be set to a time that is longer the more the weather information detected by the weather detection unit 40 indicates that the visibility of the surroundings, for the driver D, is poor. However, it may instead be an example wherein, for the warning issuing time calculation unit, the prescribed time that is added when bad weather is detected is applied as a constant time.

Embodiments 1-3 are the example of a device, for the obstacle detection device 130, structured through a camera ECU that calculates necessary information based on images forward of the vehicle 100, captured by a front camera 140. However, the obstacle detecting device is not limited to this example. For example, a distance measuring sensor such as a laser, a lidar, may be used to recognize obstacles that exist to the front of the vehicle, the distances to the obstacles, the movement speeds of the obstacles, the relative speeds between the vehicle and the obstacles. Moreover, the necessary information may also be acquired through sensor fusion of a camera and a distance measuring sensor.

Embodiments 1-3 depict examples wherein the inattention warning device 1 and the inattention warning method according to the present invention are applied to driver monitoring systems A1, A2, and A3. The inattention warning device and the inattention warning method according to the present invention may be applied to driving assisting systems and automatic driving systems that incorporate driver monitoring technology.

DESCRIPTION OF REFERENCE NUMERAL

     1: Inattention Warning Device
     10: Inattention Detection Unit
     20: Warning Issuing Time Calculation Unit
     21: Input Unit
     22: Arrival Time Estimation Calculating Unit
     30: Warning Unit
     40: Weather Detection Unit

**Claims**

1.  An inattention warning device (1) for warning a driver (D) of a vehicle (100) regarding inattention, comprising:

    an inattention detecting unit (10) that detects inattention of the driver (D) of the vehicle (100); a weather detection unit (40) that detects weather outside the vehicle; a warning issuing time calculation unit (20) that calculates a warning issuing time (t1) by calculation in accordance with a predetermined condition when the inattention of the driver (D) has been detected, said calculation in accordance with the predetermined condition includes a calculation that delays the warning issuing time (t1) when the weather detection unit (40) detects bad weather; and a warning unit (30) that issues a warning regarding the inattention if the inattention continues until the warning issuing time (t1) has expired, otherwise not issues any warning regarding the inattention if the inattention has not continued until the warning issuing time (t1) has expired.

2.  The inattention warning device (1) according to claim 1, wherein said calculation of the warning issuing time (t1) in accordance with the predetermined condition by the warning issuing time calculation includes:

    calculating an estimated arrival time (t0) at which the vehicle (100) is forecasted to arrive at an obstacle (200); subtracting a predetermined delay time ($\Delta t$) from the estimated arrival time (t0), and adding a predetermined additional time (ta) to the estimated arrival time (t0) if the weather detection unit (40) detects bad weather.

3.  The inattention warning device (1) according to claim 2, wherein the warning issuing time calculation unit (2) sets longer time as the predetermined additional time (ta) as the weather detected by the weather detection unit (40) indicates worse visibility of the surroundings for the driver (D).

4.  The inattention warning device (1) according to any one of claims 1 through 3, wherein the weather detection unit (40) detects weather outside of the vehicle (100) based on windshield wiper actuation information of a windshield wiper (150).

5.  The inattention warning device (1) according to any one of claims 1 through 3, wherein the weather detection unit (40) detects weather outside of the vehicle (100) based on rain drop detection information from a rain detecting device that detects rain drops on the windshield of the vehicle (100).

6.  The inattention warning device (1) according to any one of claims 1 through 3, wherein the weather detection unit (40) detects weather outside of the vehicle (100) based on weather information acquired from an external information provider (170) through radio communication.

7.  An inattention warning method for warning a driver (D) of a vehicle (100) regarding inattention, including the steps of:

    detecting inattention of the driver (D) of the vehicle (100); detecting weather outside the vehicle (100); calculating a warning issuing time (t1) by calculation in accordance with a predetermined condition when the inattention of the driver (D) has been detected, said calculation in accordance with the predetermined condition includes a calculation that delays the warning issuing time (t1) when bad weather is detected outside the vehicle (100); and issuing a warning regarding the inattention if the inattention continues until the warning issuing time (t1) has expired, otherwise no warning regarding the inattention if the inattention has not continued until the warning issuing time (t1) has expired.

8.  The inattention warning method according to claim 7, wherein said step of calculating the warning issuing time (t1) by calculation in accordance with the predetermined condition includes the steps of:

    calculating an estimated arrival time (t0) at which the vehicle (100) is forecasted to arrive at an obstacle (200); subtracting a predetermined delay time ($\Delta t$) from the estimated arrival time (t0), and adding a predetermined additional time (ta) to the estimated arrival time (t0) if the weather detection unit (40) detects bad weather.

**Patentansprüche**

1.  Unaufmerksamkeitswarnvorrichtung (1) zum Warnen eines Fahrers (D) eines Fahrzeugs (100) in Bezug auf eine Unaufmerksamkeit, umfassend:

    eine Unaufmerksamkeitserfassungseinheit (10), die Unaufmerksamkeit des Fahrers (D) des Fahrzeugs (100) erfasst; eine Wettererfassungseinheit (40), die Wetter außerhalb des Fahrzeugs erfasst;

eine Warnungsausgabezeitberechnungseinheit (20), die eine Warnungsausgabezeit (t1) durch Berechnung gemäß einer zuvor bestimmten Bedingung berechnet, wenn die Unaufmerksamkeit des Fahrers (D) erfasst wurde, wobei die Berechnung gemäß der zuvor bestimmten Bedingung eine Berechnung einschließt, die die Warnungsausgabezeit (t1) verzögert, wenn die Wettererfassungseinheit (40) schlechtes Wetter erfasst; und

eine Warneinheit (30), die eine Warnung in Bezug auf die Unaufmerksamkeit ausgibt, falls die Unaufmerksamkeit anhält bis die Warnungsausgabezeit (t1) abgelaufen ist, andernfalls keine Warnung in Bezug auf die Unaufmerksamkeit ausgibt, falls die Unaufmerksamkeit nicht angehalten hat bis die Warnungsausgabezeit (t1) abgelaufen ist.

2. Unaufmerksamkeitswarnvorrichtung (1) nach Anspruch 1, wobei die Berechnung der Warnungsausgabezeit (t1) gemäß der zuvor bestimmten Bedingung durch die Warnungsausgabezeitberechnung einschließt:

Berechnen einer geschätzten Ankunftszeit (t0), zu der das Fahrzeug (100) vorhergesagt wird, an einem Hindernis (200) anzukommen;
Subtrahieren einer zuvor bestimmten Verzögerungszeit (Δt) von der geschätzten Ankunftszeit (t0) und Addieren einer zuvor bestimmten zusätzlichen Zeit (ta) mit der geschätzten Ankunftszeit (t0), falls die Wettererfassungseinheit (40) schlechtes Wetter erfasst.

3. Unaufmerksamkeitswarnvorrichtung (1) nach Anspruch 2, wobei die Warnungsausgabezeitberechnungseinheit (2) eine längere Zeit als die zuvor bestimmte zusätzliche Zeit (ta) festlegt, sobald Wetter, das durch die Wettererfassungseinheit (40) erfasst wird, eine schlechtere Sicht der Umgebung für den Fahrer (D) angibt.

4. Unaufmerksamkeitswarnvorrichtung (1) nach einem der Ansprüche 1 bis 3, wobei die Wettererfassungseinheit (40) Wetter außerhalb des Fahrzeugs (100) basierend auf Scheibenwischerbetätigungsinformationen eines Scheibenwischers (150) erfasst.

5. Unaufmerksamkeitswarnvorrichtung (1) nach einem der Ansprüche 1 bis 3, wobei die Wettererfassungseinheit (40) Wetter außerhalb des Fahrzeugs (100) basierend auf Regenfallerfassungsinformationen von einer Regenerfassungsvorrichtung erfasst, die Regentropfen auf der Windschutzscheibe des Fahrzeugs (100) erfasst.

6. Unaufmerksamkeitswarnvorrichtung (1) nach einem der Ansprüche 1 bis 3, wobei die Wettererfassungseinheit (40) Wetter außerhalb des Fahrzeugs (100) basierend auf Wetterinformationen erfasst, die von einem externen Informationsanbieter (170) durch Funkverbindung erlangt werden.

7. Unaufmerksamkeitswarnverfahren zum Warnen eines Fahrers (D) eines Fahrzeugs (100) in Bezug auf die Unaufmerksamkeit, das die Schritte einschließt:

Erfassen der Unaufmerksamkeit des Fahrers (D) des Fahrzeugs (100);
Erfassen von Wetter außerhalb des Fahrzeugs (100);
Berechnen einer Warnungsausgabezeit (t1) durch Berechnung gemäß einer zuvor bestimmten Bedingung, wenn die Unaufmerksamkeit des Fahrers (D) erfasst wurde, wobei die Berechnung gemäß der zuvor bestimmten Bedingung eine Berechnung einschließt, die die Warnungsausgabezeit (t1) verzögert, wenn schlechtes Wetter außerhalb des Fahrzeugs (100) erfasst wird; und
Ausgeben einer Warnung in Bezug auf die Unaufmerksamkeit, falls die Unaufmerksamkeit anhält bis die Warnungsausgabezeit (t1) abgelaufen ist, andernfalls keiner Warnung in Bezug auf die Unaufmerksamkeit, falls die Unaufmerksamkeit nicht angehalten hat bis die Warnungsausgabezeit (t1) abgelaufen ist.

8. Unaufmerksamkeitswarnverfahren nach Anspruch 7, wobei der Schritt des Berechnens der Warnungsausgabezeit (t1) durch Berechnung gemäß der zuvor bestimmten Bedingung die Schritte einschließt:

Berechnen einer geschätzten Ankunftszeit (t0), zu der das Fahrzeug (100) vorhergesagt wird, an einem Hindernis (200) anzukommen;
Subtrahieren einer zuvor bestimmten Verzögerungszeit (Δt) von der geschätzten Ankunftszeit (t0), und
Addieren einer zuvor bestimmten zusätzlichen Zeit (ta) mit der geschätzten Ankunftszeit (t0), falls die Wettererfassungseinheit (40) schlechtes Wetter erfasst.

**Revendications**

1. Dispositif d'avertissement d'inattention (1) permettant d'avertir un conducteur (D) d'un véhicule (100) concernant une inattention, comprenant :

une unité de détection d'inattention (10) qui détecte une inattention du conducteur (D) du véhicule (100) ;
une unité de détection de conditions météorologiques (40) qui détecte des conditions météorologiques à l'extérieur du véhicule ;

une unité de calcul de délai de délivrance d'avertissement (20) qui calcule un délai de délivrance d'avertissement (t1) par calcul conformément à une condition prédéterminée lorsque l'inattention du conducteur (D) a été détectée, ledit calcul conformément à la condition prédéterminée comporte un calcul qui retarde le délai de délivrance d'avertissement (t1) lorsque l'unité de détection de conditions météorologiques (40) détecte de mauvaises conditions météorologiques ; et

une unité d'avertissement (30) qui délivre un avertissement concernant l'inattention si l'inattention se poursuit jusqu'à ce que le délai de délivrance d'avertissement (t1) ait expiré, autrement ne délivre aucun avertissement concernant l'inattention si l'inattention ne s'est pas poursuivie jusqu'à ce que le délai de délivrance d'avertissement (t1) ait expiré.

2. Dispositif d'avertissement d'inattention (1) selon la revendication 1, dans lequel ledit calcul du délai de délivrance d'avertissement (t1) conformément à la condition prédéterminée par le calcul de délai de délivrance d'avertissement comporte :

le calcul d'un délai d'arrivée estimé (10) auquel il est prévu que le véhicule (100) arrive au niveau d'un obstacle (200) ;

la soustraction d'un délai de retard prédéterminé (Δt) du délai d'arrivée estimé (10), et l'ajout d'un délai supplémentaire prédéterminé (ta) au délai d'arrivée estimé (10) si l'unité de détection de conditions météorologiques (40) détecte de mauvaises conditions météorologiques.

3. Dispositif d'avertissement d'inattention (1) selon la revendication 2, dans lequel l'unité de calcul de délai de délivrance d'avertissement (2) règle un délai plus long que le délai supplémentaire prédéterminé (ta) lorsque les conditions météorologiques détectées par l'unité de détection de conditions météorologiques (40) indiquent une plus mauvaise visibilité de l'environnement pour le conducteur (D).

4. Dispositif d'avertissement d'inattention (1) selon l'une quelconque des revendications 1 à 3, dans lequel l'unité de détection de conditions météorologiques (40) détecte des conditions météorologiques à l'extérieur du véhicule (100) en fonction d'informations d'actionnement d'essuie-glace de pare-brise d'un essuie-glace de pare-brise (150).

5. Dispositif d'avertissement d'inattention (1) selon l'une quelconque des revendications 1 à 3, dans lequel l'unité de détection de conditions météorologiques (40) détecte des conditions météorologiques à l'extérieur du véhicule (100) en fonction d'informations de détection de gouttes de pluie provenant d'un dispositif de détection de pluie qui détecte des gouttes de pluie sur le pare-brise du véhicule (100).

6. Dispositif d'avertissement d'inattention (1) selon l'une quelconque des revendications 1 à 3, dans lequel l'unité de détection de conditions météorologiques (40) détecte des conditions météorologiques à l'extérieur du véhicule (100) en fonction d'informations météorologiques acquises auprès d'un fournisseur externe d'informations (170) par l'intermédiaire d'une communication radio.

7. Procédé d'avertissement d'inattention permettant d'avertir un conducteur (D) d'un véhicule (100) concernant une inattention, comportant les étapes consistant à :

détecter une inattention du conducteur (D) du véhicule (100) ;

détecter des conditions météorologiques à l'extérieur du véhicule (100) ;

calculer un délai de délivrance d'avertissement (t1) par calcul conformément à une condition prédéterminée lorsque l'inattention du conducteur (D) a été détectée, ledit calcul conformément à une condition prédéterminée comporte un calcul qui retarde le délai de délivrance d'avertissement (t1) lorsque de mauvaises conditions météorologiques sont détectées à l'extérieur du véhicule (100) ; et

délivrer un avertissement concernant l'inattention si l'inattention se poursuit jusqu'à ce que le délai de délivrance d'avertissement (t1) ait expiré, autrement aucun avertissement concernant l'inattention si l'inattention ne s'est pas poursuivie jusqu'à ce que le délai de délivrance d'avertissement (t1) ait expiré.

8. Procédé d'avertissement d'inattention selon la revendication 7, dans lequel ladite étape consistant à calculer le délai de délivrance d'avertissement (t1) par calcul conformément à la condition prédéterminée comporte les étapes consistant à :

calculer un délai d'arrivée estimé (10) auquel il est prévu que le véhicule (100) arrive au niveau d'un obstacle (200) ;

soustraire un délai de retard prédéterminé (Δt) du délai d'arrivée estimé (10), et

ajouter un délai supplémentaire prédéterminé (ta) au délai d'arrivée estimé (10) si l'unité de détection de conditions météorologiques (40) détecte de mauvaises conditions météorologiques.

# FIG. 1

## A1

Inattention Warning Device — 1

- 110 Driver Monitoring Camera
- 120 Speed Detection Device
- 140 Front Camera
- 130 Obstacle Detection Device
- 150 Windshield Wiper

- 10 Inattention Detection Unit
- Warning Issuing Time Calculation Unit — 20
- 21 Input Unit
- 40 Weather Detection Unit
- 22 Arrival Time Estimation Calculating Unit
- 30 Warning Unit
- 300 Alarm Device

EP 4 194 303 B1

12

## FIG. 2

## FIG. 3

## FIG. 4

Warning Issuing Time t1

ta

t1 = t0 − Δt (Clear Weather)

Windshield Wiper Speed (= Severity of Rain)

## FIG. 5

START

MONITOR DRIVER ← S1

◄── Driver Monitoring Camera 110

INATTENSION DETECTED? ── S2

NO ←

YES

CALCULATE ESTIMATED ARRIVAL TIME & WARNING ISSUING TIME ── S3

◄── { Speed Detection Device 120
Obstacle Detection Device 130
Windshield Wiper 150

INATTENSION CONTINUES? ── S4

NO ←

YES

INATTENSION TIME REACHS WARNING ISSUING TIME? ── S5

NO ──→ NO WARNING ── S7

YES

ISSUE WARNING ── S6

# FIG. 6

## A2

Inattention Warning Device — 1

- 110 Driver Monitoring Camera
- 10 Inattention Detection Unit
- Warning Issuing Time Calculation Unit — 20
- 30 Warning Unit
- 300 Alarm Device
- 120 Speed Detection Device
- 21 Input Unit
- 140 Front Camera
- 130 Obstacle Detection Device
- 50 Weather Detection Unit
- 22 Arrival Time Estimation Calculating Unit
- 160 Rain Drop Detection Device

EP 4 194 303 B1

FIG. 7

<u>A3</u>

Inattention Warning Device — 1

Driver Monitoring Camera — 110
Inattention Detection Unit — 10
Warning Issuing Time Calculation Unit — 20
Warning Unit — 30
Alarm Device — 300

Speed Detection Device — 120
Input Unit — 21

Front Camera — 140
Obstacle Detection Device — 130
Weather Detection Unit — 60
Arrival Time Estimation Calculating Unit — 22

Information Provider — 170
60a
170a

EP 4 194 303 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008217693 A
- JP 7257301 A

- JP 540361 C